(19) Europäisches Patentamt / European Patent Office / Office européen des brevets

(11) **EP 4 157 910 B1**

(12) **EUROPEAN PATENT SPECIFICATION**

(45) Date of publication and mention of the grant of the patent:
**26.02.2025 Bulletin 2025/09**

(21) Application number: **21728261.5**

(22) Date of filing: **02.06.2021**

(51) International Patent Classification (IPC):
***C08G 18/09*** *(2006.01)* ***C08G 18/16*** *(2006.01)*
***C08G 18/18*** *(2006.01)* ***C08G 18/22*** *(2006.01)*
***C08G 18/42*** *(2006.01)* ***C08G 18/76*** *(2006.01)*
***C08K 5/1515*** *(2006.01)* ***C08J 9/08*** *(2006.01)*
***C08J 9/12*** *(2006.01)* ***C08J 9/14*** *(2006.01)*
***C08G 101/00*** *(2006.01)*

(52) Cooperative Patent Classification (CPC):
(C-Sets available)
**C08G 18/7664; C08G 18/092; C08G 18/163; C08G 18/1808; C08G 18/225; C08G 18/4211; C08J 9/141; C08J 9/144; C08K 5/1515;**
C08G 2110/0025; C08J 2375/04 (Cont.)

(86) International application number:
**PCT/EP2021/064750**

(87) International publication number:
**WO 2021/245120 (09.12.2021 Gazette 2021/49)**

(54) **USE OF EPOXY COMPOUNDS AS CARBON DIOXIDE SCAVENGERS IN PIR COMPRISING FOAMS FOR SUPERIOR THERMAL INSULATION PROPERTIES**

VERWENDUNG VON EPOXIDVERBINDUNGEN ALS KOHLENDIOXIDFÄNGER IN PIR, DIE SCHÄUME FÜR HERVORRAGENDE WÄRMEDÄMMEIGENSCHAFTEN ENTHALTEN

UTILISATION DE COMPOSÉS D'ÉPOXY EN TANT QU'AGENTS D'ÉPURATION DE DIOXYDE DE CARBONE DANS DES MOUSSES COMPRENANT DU PIR POUR DES PROPRIÉTÉS D'ISOLATION THERMIQUE SUPÉRIEURES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.06.2020 EP 20177774**

(43) Date of publication of application:
**05.04.2023 Bulletin 2023/14**


(73) Proprietor: **Huntsman International LLC**
**The Woodlands, TX 77380 (US)**

(72) Inventors:
- **JONCHERAY, Thomas, Julien**
**1150 Woluwe Saint Pierre (BE)**
- **VANDENBROECK, Jan**
**3271 Scherpenheuvel-Zichem (BE)**
- **GEUMEZ, Gilles, Jean**
**1410 Waterloo (BE)**

(74) Representative: **Roberts, Philippa Grace**
**Huntsman (Europe) BV**
**Grijpenlaan 18**
**3300 Tienen (BE)**



(56) References cited:
**WO-A1-2019/211259** **JP-A- H08 219 372**
**US-A- 5 773 482** **US-A1- 2018 030 196**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 4 157 910 B1

(52) Cooperative Patent Classification (CPC): (Cont.)

C-Sets
**C08K 5/1515, C08L 75/06**

## Description

FIELD OF INVENTION

The present invention is related to polyisocyanurate (PIR) comprising insulation foams, more in particular semi-rigid and rigid PIR comprising insulation foams having significantly improved long term insulation values when used under diffusion tight conditions such that low thermal conductivity (lambda value) is achieved during the average economic lifetime of the foam.

Further the present invention is related to a reactive composition and a process for preparing PIR comprising insulation foams having significantly improved thermal insulation properties maintained over the average economic lifetime of the foam thereby making use of blowing agents having low lambda gas values (≤ 12 mW/m.K at 10 °C) in combination with a predetermined amount of $CO_2$ scavengers.

The invention is further related to the use of epoxy compounds as $CO_2$ scavengers in PIR comprising insulation foams.

BACKGROUND

After fabrication, it is well known that closed cell rigid polyisocyanurate (PIR) and polyurethane (PUR) comprising insulation foams generally contain $CO_2$ which is released during foaming.

As the thermal conductivity (expressed in mW/m.K and noted as "lambda" or "λ" value) of $CO_2$ gas is higher than the thermal conductivity of commonly used physical blowing agents, the total lambda value of a given PUR and PIR comprising foam is typically higher than if $CO_2$ gas was not present.

To solve that problem, the $CO_2$ could be removed from the cell gas mixture after foam production, for instance by the use of $CO_2$ scavengers incorporated within the foam.

A variety of $CO_2$ scavengers have been previously identified and successfully used for isocyanate-based foams (EP 1 031 601 and EP 0 618 253), such as for instance zeolites, calcium hydroxide, sodium hydroxide, lithium hydroxide,...

WO2019/211259 discloses the use of NaOH and KOH compounds as $CO_2$ scavengers. Due to their low cost (commodity chemicals) and their quantitative reaction with $CO_2$ these compounds result in efficient scavenging. Nevertheless, they are used in the form of solid particles which is not ideal in terms of processing. Moreover, they are only applicable to ageing conditions in which some moisture diffusion inside the foams can take place (i.e. moisture-catalyzed scavenging), which then excludes their use in applications such as Composite Panels, Appliances or Pipes, unless specific moisture permeable facers are used.

EP0723989 discloses the use of epoxy compounds as $CO_2$ scavengers in a method for manufacturing a polyurethane (PUR) thermal insulating foamed material wherein the amount of epoxy compounds should be not less than 2.5 molar equivalents and not more than 4 molar equivalents to the stoichiometric moles of carbon dioxide produced from water used as the reactive blowing agent. However, EP0723989 is limited to polyurethane insulation foams and (predominantly) PIR comprising insulation foams are not disclosed.

On the other hand, the criteria for thermal insulation foams, especially for use in construction and consumer goods, become more and more stringent and there is a need to further improve (i.e. reduce) the lambda value (thermal conductivity) of predominantly PIR comprising foams and to maintain the low lambda value over the whole life time of the foam.

To further improve the lambda value of PIR comprising foams, alternative blowing agents with very low thermal conductivity were implemented such as Hydro Fluoro Carbons (HFCs). Very recently Hydro Fluoro Olefins (HFOs) and Hydro Chloro Fluoro Olefins (HCFOs) were also implemented.

It is however a challenge to both achieve the removal of $CO_2$ gas in a (predominantly) PIR comprising insulation foam and at the same time improve the lambda value significantly thereby avoiding an overdose and/or negative impact of a residual amount of scavenger and to obtain predominantly PIR comprising foams which have very low thermal conductivity which also remains low over long time periods (at least during the average economic lifetime of the foam).

GOAL OF THE INVENTION

It is the goal of the invention to improve the thermal insulation of polyisocyanurate (PIR) comprising insulation foams made using an isocyanate index > 120 significantly and to maintain the superior thermal insulation properties (i.e. the low lambda values) over long time periods.

The goal of the invention is achieved by capturing the $CO_2$ released during foaming and during ageing, in combination with the use and presence of blowing agents having low thermal conductivity.

Therefore, the present invention relates to novel polyisocyanurate (PIR) comprising insulation foams having significantly improved insulation values maintained over the average economic lifetime of the foam as well as a novel

reactive mixture and processing method to fabricate said improved insulation foams and use of the improved insulation foams for thermal insulation.

SUMMARY OF THE INVENTION

A reactive composition for making a PIR comprising foam at an isocyanate index of at least 120 is disclosed wherein said foam is having significantly improved insulation values maintained over the average economic lifetime of the foam. Said reactive composition comprising at least:

a) An isocyanate composition comprising one or more isocyanate compounds, and
b) An isocyanate-reactive composition comprising one or more isocyanate-reactive compounds, and
c) At least one PIR promoting catalyst, and
d) At least one physical blowing agent with a lambda gas ≤ 12 mW/m.K at 10 °C, and
e) At least one $CO_2$ scavenging compound selected from at least one epoxy compound having an equivalent weight lower than 300g/mol, and
f) Optionally a catalyst promoting epoxy reaction with $CO_2$

Characterized in that the amount of isocyanate-reactive compounds b) in the reactive composition is at least 10 wt% calculated on the total weight of the reactive composition, or at least more than the amount of epoxy compounds and the molar amount of epoxy compounds in the reactive composition is at least 7.8 times higher than the molar amount of $CO_2$ formed by the water present in the reactive composition after reaction with isocyanates.

According to embodiments, the amount of isocyanate-reactive compounds b) in the reactive composition is at least 15 wt%, preferably at least 20 wt% calculated on the total weight of the reactive composition.

According to embodiments, the molar amount of epoxy compounds in the reactive composition is preferably at least 10 times, more preferably at least 15 times higher than the molar amount of $CO_2$ formed by the water present in the reactive composition after reaction with isocyanates. The ratio of the molar amounts of epoxy compounds in the reactive composition over the molar amount of $CO_2$ formed by the water is also referred to in this application as the molar ratio of epoxy groups over water in the reactive composition.

According to embodiments, the maximum amount of all epoxy compounds in the reactive composition is < 25 wt%, preferably < 20 wt% calculated on the total weight of the reactive composition.

According to embodiments, the at least one epoxy compound in the reactive composition is selected from epoxy compounds having equivalent weight lower than 250g/mol, preferably lower than 200g/mol and wherein the at least one epoxy compound used is liquid at 20 °C.

According to embodiments, the catalyst used for promoting epoxy reaction with $CO_2$ is selected from ammonium salts, more preferably selected from tetrabutylammonium bromide and/or tetrabutylammonium iodide.

According to embodiments, the at least one physical blowing agent having a lambda gas value ≤ 12 mW/m.K @ 10°C is selected from an HFO blowing agent and/or HCFO blowing agent and/or hydrocarbon blowing agent such as cyclopentane and mixtures thereof.

According to embodiments, the at least one physical blowing agent having a lambda gas value ≤ 12 mW/m.K @ 10°C is selected from chlorofluorocarbons (CFCs) and/or hydrofluorocarbons (HFCs) and/or hydrochlorofluorocarbons (HCFCs).

According to embodiments, the polyisocyanate compounds in the reactive composition are selected from a toluene diisocyanate, a methylene diphenyl diisocyanate or a polyisocyanate composition comprising a methylene diphenyl diisocyanate or a mixture of such polyisocyanates.

According to embodiments, the one or more isocyanate reactive compounds in the reactive composition comprise polyols and polyol mixtures having average hydroxyl numbers of from 50 to 1000, especially from 150 to 700 mg KOH/g, and hydroxyl functionalities of from 2 to 8, especially from 3 to 8.

According to embodiments, the blowing agent is present in the reactive composition in an amount of 1 to 60 parts by weight, preferably from 2 to 45 parts by weight per hundred parts by weight isocyanate reactive compounds.

According to embodiments, the reactive composition is further comprising beside the blowing agents having a lambda gas value ≤ 12 mW/m.K at 10°C additional blowing agents having a lambda gas value >12 mW/m.K at 10°C and wherein the ratio of blowing agents having a lambda gas value ≤12 mW/m.K at 10°C to the additional blowing agents is in the weight ratio 95/5 up to 5/95 calculated on the total weight of all blowing agents.

Further, the invention discloses a process for making a PIR comprising insulation foam having significantly improved insulation values maintained over the average economic lifetime of the foam, said process comprising combining and/or mixing the ingredients of the reactive composition at an isocyanate index of at least 120, preferably at least 150, more preferably at least 200, most preferably at least 250.

According to embodiments, the process for making a PIR comprising insulation foam of the invention is further

including a step of sealing the foam with a gas diffusion tight sealing wherein at least 50%, preferably at least 90%, more preferably 95 %, most preferably 90-100 % of the foam surfaces are covered with the gas diffusion tight sealing.

According to embodiments, the gas diffusion tight sealing in the PIR comprising insulation foam of the invention is selected from metal foils such as Aluminum foil or metal multilayers comprising Aluminum foil and/or gas barrier polymer layers such as ethylene vinyl alcohol copolymer (EVOH), polyvinyl alcohol (PVOH) and its copolymers, polyvinylidene chloride (PVDC), polyamide (PA), polyethylene terephthalate (PET), Polyketones (PK), Polyacrilonitriles (PAN) and combinations thereof and/or a thermoplastic polymer such as polyethylene and/or polypropylene.

According to embodiments, the process for making a PIR comprising insulation foam of the invention is further including after sealing the foam a step of ageing the foam, said ageing step includes keeping the foam at a given temperature above room temperature until a stable low lambda value is obtained, preferably at a temperature between 25 and 100°C, more preferably between 40 and 80°C, even more preferably between 55 and 70°C for less than one month, more preferably for less than one week, even more preferably for less than one day.

Further, the invention discloses a stabilized PIR comprising insulation foam made using the process according to the invention wherein the wt % of $CO_2$ in the stabilized aged foam is between 0 and 2 wt%, preferably between 0 and 1 wt %, more preferably between 0 and 0.5 wt %, calculated on the total weight of the stabilized aged foam.

According to embodiments, the stabilized PIR comprising insulation foam according to the invention is having a foam density < 45 kg/m$^3$ and a stabilized thermal conductivity < 20 mW/m.K at 10 °C, preferably 14 up to 20 mW/m.K at 10°C.

According to embodiments, the stabilized PIR comprising insulation foam according to the invention is having a foam density > 45 kg/m$^3$ and a stabilized thermal conductivity < 25 mW/m.K at 10 °C, preferably 14 up to 25 mW/m.K at 10°C.

The stabilized PIR comprising insulation foam according to the invention is suitable for use as thermal insulator such as construction thermal insulation foam, appliance thermal insulation foam or pipe insulation.

The independent and dependent claims set out particular and preferred features of the invention. Features from the dependent claims may be combined with features of the independent or other dependent claims as appropriate.

DEFINITIONS AND TERMS

In the context of the present invention the following terms have the following meaning:

1) The expression "**isocyanate index**" or "**NCO index**" or "**index**" as used herein refers to the ratio of NCO-groups over isocyanate-reactive hydrogen atoms present in a formulation, given as a percentage:

$$\frac{[NCO] \times 100}{[\text{active hydrogen}]} \quad (\%).$$

In other words the NCO-index expresses the percentage of isocyanate actually used in a formulation with respect to the amount of isocyanate theoretically required for reacting with the amount of isocyanate-reactive hydrogen used in a formulation.

It should be observed that the isocyanate index as used herein is considered from the point of view of the actual polymerisation process preparing the material involving the isocyanate ingredient and the isocyanate-reactive ingredients. Any isocyanate groups consumed in a preliminary step to produce modified polyisocyanates (including such isocyanate-derivatives referred to in the art as prepolymers) or any active hydrogens consumed in a preliminary step (e.g. reacted with isocyanate to produce modified polyols or polyamines) are not taken into account in the calculation of the isocyanate index. Only the free isocyanate groups and the free isocyanate-reactive hydrogens (including those of water, if used) present at the actual polymerisation stage are taken into account.

It is possible that part of the epoxy compounds used as $CO_2$ scavenger react to some extent as well with isocyanates to form in-situ during foaming oxazolidone/oxazolidinone groups, but these reactions are not considered for the index calculation herein.

2) The expression "**isocyanate-reactive compounds**" (also referred to as iso-reactive compounds) and "**isocyanate-reactive hydrogen atoms**" as used herein for the purpose of calculating the isocyanate index refers to the total of active hydrogen atoms in hydroxyl and amine groups present in the isocyanate reactive compounds; this means that for the purpose of calculating the isocyanate index at the actual polymerisation process one hydroxyl group is considered to comprise one reactive hydrogen, one primary amine group is considered to comprise one reactive hydrogen and one water molecule is considered to comprise two active hydrogens.

3) "**Reactive composition**" or "**Reaction mixture**" as used herein refers to a combination of compounds wherein the polyisocyanates are kept in one or more containers separate from the isocyanate-reactive components.

4) The term "**average nominal functionality**" (or in short "functionality") is used herein to indicate the number average functionality. For example, the average nominal hydroxyl functionality of a polyol or polyol composition indicates the number average of hydroxyl groups per molecule of the polyol or polyol composition on the assumption that this is the number average functionality (number of active hydrogen atoms per molecule) of the initiator(s) used in their preparation although in practice it will often be somewhat less because of some terminal unsaturation. The average nominal epoxy functionality of epoxy compounds or epoxy composition indicates the number average of epoxy groups per molecule of the epoxy compound or epoxy composition.

5) The word "**average**" refers to number average unless indicated otherwise.

6) The term "**equivalent molecular weight**" of a compound refers to the molecular weight of a compound divided by its functionality.

7) "**Trimerization catalyst**" as used herein refers to a catalyst being able to catalyse (promote) the formation of isocyanurate groups from polyisocyanates. This means that isocyanates can react with one another to form macromolecules with isocyanurate structures (polyisocyanurate =PIR). Reactions between isocyanates-polyols and isocyanates-isocyanates (homopolymerization) can take place simultaneously or in direct succession, forming macromolecules with urethane and isocyanurate structures.

8) "**Polyisocyanurate comprising foam**", "**PIR comprising foam**" and "**predominantly PIR comprising insulation foam**" as used herein refers to a foam made at an isocyanate index of at least 120, more preferably at an isocyanate index higher than 180, most preferably at an isocyanate index higher than 250 and comprising predominantly polyisocyanurate (PIR) compounds.

9) "**Foam density**" as used herein refers to the density measured on foam samples according to ISO 845 and is calculated as weight/volume and is expressed in $kg/m^3$.

10) "**Thermal conductivity**" measurements are carried out at 10 °C according to ISO8301 using a Heat Flow Meter (HFM) apparatus. "Lambda value", "$\lambda$ value" or "k value" as used herein refers to the thermal conductivity of a material normally expressed in mW/m.K. The lower the lambda value the better the thermal insulation performance.

11) "**Closed cell content**" of a foam is measured using a pycnometer according to ISO 4590.

12) "**Stabilized lambda value**", "**Stabilized $\lambda$ value**" and "**Stabilized k value**" of a foam as used herein refers to a thermal conductivity value at 10 °C (according to ISO8301) which is not changing over time (variations $\leq$ 0.5 mW/m.K). For foams according to the invention, a stabilized lambda value is achieved after the time required to capture the $CO_2$ by the $CO_2$ scavenging compound according to the invention (after completion of the $CO_2$ scavenging process). The completion of the $CO_2$ scavenging process can take hours up to several months depending on the type of formulations.

13) "**Ageing**" refers to a treatment of a foam wherein the foam is being kept at a certain temperature for a given amount of time.

14) The expression "molar amount of epoxy compounds in the reactive composition over the molar amount of $CO_2$ formed by the water present in the reactive composition after reaction with isocyanates" is also referred to in this application as "**the molar ratio of epoxy groups over water**" present in the reactive composition. At an isocyanate index > 120 it is assumed that all water present in the reactive composition is converted to $CO_2$ by means of reaction of the water with free NCO groups.

## DETAILED DESCRIPTION

The present invention will be described with respect to particular embodiments.

It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more

other features, steps or components, or groups thereof.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

It is to be understood that although preferred embodiments and/or materials have been discussed for providing embodiments according to the present invention, various modifications or changes may be made without departing from the scope of this invention.

The present invention relates to polyisocyanurate (PIR) comprising insulation foams suffering from deteriorated insulation values due to the formation of $CO_2$.

The present invention developed a method in which an optimized amount of $CO_2$ scavenger compound is added to the reactive compositions used to make PIR comprising foams which captures most of the $CO_2$ formed during foaming and ageing in combination with the use of blowing agents with lambda ≤ 12mW/m.k at 10°C.

The present invention therefore relates to novel polyisocyanurate (PIR) comprising insulation foams having significantly improved thermal insulation values maintained over the average economic lifetime of the foam, a novel processing method to fabricate said improved thermal insulation foams and use of the improved insulation foams for thermal insulation.

According to a first aspect, a reactive composition for making a polyisocyanurate (PIR) comprising insulation foam having significantly improved thermal insulation properties maintained over the average economic lifetime of the foam is disclosed.

The reactive composition used to make the PIR comprising foam of the invention at an isocyanate index of at least 120 is comprising:

a) An isocyanate composition comprising one or more isocyanate compounds,
b) An isocyanate-reactive composition comprising one or more isocyanate-reactive compounds, and
c) At least one PIR promoting catalyst, and
d) At least one physical blowing agent with a lambda gas ≤ 12 mW/m.K at 10 °C, and
e) At least one $CO_2$ scavenging compound selected from at least one epoxy compound having an equivalent weight lower than 300g/mol, and
f) Optionally a catalyst promoting epoxy reaction with $CO_2$

Characterized in that the amount of isocyanate-reactive compounds b) in the reactive composition is at least 10 wt% calculated on the total weight of the reactive composition, or at least more than the amount of epoxy compounds and the molar amount of epoxy groups in the reactive composition is at least 7.8 times higher than the molar amount of $CO_2$ formed by the water present in the reactive composition after reaction with isocyanates.

According to embodiments, the amount of isocyanate-reactive compounds b) in the reactive composition is at least 10 wt%, preferably at least 15 wt%, more preferably at least 20 wt% calculated on the total weight of the reactive composition.

According to embodiments, the molar amount of epoxy groups in the reactive composition is preferably at least 10 times, more preferably at least 15 times higher than the molar amount of $CO_2$ formed by the water present in the reactive composition after reaction with isocyanates.

According to embodiments, the total amount of epoxy compounds in the reactive composition should be at least a few weight percent, preferably > 2 wt%, more preferably > 5wt%, most preferably > 10 wt% calculated on the total weight of the reactive composition independently of the amount of water present in the reactive composition in order to be able to scavenge the $CO_2$ formed from carbodiimide reaction and/or additional $CO_2$ formed by the reaction between residual NCOs and moisture.

According to embodiments, the maximum amount of all epoxy compounds in the reactive composition should be < 25 wt%, preferably < 20 wt% calculated on the total weight of the reactive composition to avoid issues such as excessive reaction with isocyanate, increased exotherm, dimensional stability issues, too much unreacted epoxy compounds,...

According to embodiments, the at least one epoxy compound is selected from epoxy compounds having equivalent weight lower than 300g/mol, preferably lower than 250g/mol, more preferably lower than 200g/mol. Using epoxy compound with low equivalent weight is advantageous to ensure using as little as possible epoxy compound (in wt% of the total formulation) for optimum $CO_2$ scavenging.

According to embodiments, the epoxy compound(s) used is/are liquid at 20 °C.

Examples of suitable (poly)epoxy compounds are:

1) Polyglycidyl and poly(β-methylglycidyl) esters, obtainable by reacting a compound having at least one carboxyl groups in the molecule and, respectively, epichlorohydrin and β-methylepichlorohydrin. The reaction is expediently carried out in the presence of bases. Aliphatic mono and poly carboxylic acids can be used as the compound having at least one carboxyl group in the molecule. Examples of such mono carboxylic acids are propionic acid, butyric acid and pentanoic acid. Examples of such polycarboxylic acids are oxalic acid, succinic acid, glutaric acid, adipic acid, pimelic acid, suberic acid and azelaic acid. However, cycloaliphatic polycarboxylic acids, such as, for example, tetrahydrophthalic acid, 4-methyltetrahydrophthalic acid, hexahydrophthalic acid or 4-methylhexahydrophthalic acid, may also be used. Furthermore, aromatic polycarboxylic acids, such as, for example, phthalic acid, isophthalic acid or terephthalic acid, may be used.

2) Polyglycidyl or poly(β-methylglycidyl) ethers, obtainable by reacting a compound having at least one free alcoholic hydroxyl groups and/or phenolic hydroxyl groups with epichlorohydrin or β-methylepichlorohydrin under alkaline conditions or in the presence of an acidic catalyst with subsequent treatment with alkali. The glycidyl ethers of this type are derived, for example, from acyclic alcohols, for example from butanol, pentanol, ethylene glycol, diethylene glycol or higher poly(oxyethylene) glycols, propane-1,2-diol or poly(oxypropylene) glycols, propane-1,3-diol, butane-1,4-diol, poly(oxytetramethylene) glycols, pentane-1,5-diol, hexane-1,6-diol, hexane-2,4,6-triol, glycerol, 1,1,1-trimethylolpropane, pentaerythritol or sorbitol, and from polyepichlorohydrins. Further glycidyl ethers of this type are derived from cycloaliphatic alcohols, such as 1,4-cyclohexanedimethanol, bis(4-hydroxycyclohexyl)methane or 2,2-bis(4-hydroxycyclohexyl)propane, or from alcohols which contain aromatic groups and/or further functional groups, such as N,N-bis(2-hydroxyethyl)aniline or p,p'-bis(2-hydroxyethylamino)-diphenylmethane. The glycidyl ethers may also be based on mononuclear phenols, such as, for example, phenol, p tert-butylphenol, resorcinol or hydroquinone, or on polynuclear phenols, such as, for example, bis(4-hydroxyphenyl)methane, 4,4'-dihydroxybiphenyl, bis(4-hydroxyphenyl) sulphone, 1,1,2,2-tetrakis(4-hydroxyphenyl)ethane, 2,2-bis(4-hydroxyphenyl)propane or 2,2-bis(3,5-dibromo-4-hydroxyphenyl)propane. Further suitable hydroxy compounds for the preparation of glycidyl ethers are novolacs, obtainable by condensation of aldehydes, such as formaldehyde, acetaldehyde, chloral or furfuraldehyde, with phenols or bisphenols which are unsubstituted or substituted by chlorine atoms or C1-C9-alkyl groups, such as, for example, phenol, 4-chlorophenol, 2-methylphenol or 4-tert-butylphenol.

3) Poly(N-glycidyl) compounds, obtainable by dehydrochlorination of the reaction products of epichlorohydrin with amines which contain at least one amine hydrogen atom. These amines are, for example, aniline, n-butylamine, bis(4-aminophenyl)methane, m-xylylenediamine or bis(4-methylaminophenyl)methane. The poly(N-glycidyl) compounds also include triglycidyl isocyanurate, N,N'-diglycidyl derivatives of cycloalkyleneureas, such as ethyleneurea or 1,3-propyleneurea, and diglycidyl derivatives of hydantoins, such as of 5,5-dimethylhydantoin.

4) Poly(S-glycidyl) compounds, for example S-glycidyl derivatives, which are derived from thiols, such as, for example, ethane-1,2-dithiol or bis(4-mercaptomethylphenyl) ether.

5) Cycloaliphatic epoxy compound(s), such as, for example, bis(2,3-epoxycyclopentyl) ether, 2,3-epoxycyclopentyl glycidyl ether, 1,2-bis(2,3-epoxycyclopentyloxy)ethane or 3,4-epoxycyclohexylmethyl-3',4'-epoxycyclohexanecarboxylate.

It is also possible to use (poly)epoxy compound(s) in which the 1,2-epoxy groups are bonded to different hetero atoms or functional groups; these compounds include, for example, the N,N,O-triglycidyl derivative of 4-aminophenol, the glycidyl ether-glycidyl ester of salicylic acid, N-glycidyl-N'-(2-glycidyloxypropyl)-5,5-dimethylhydantoin or 2-glycidyloxy-1,3-bis(5,5-dimethyl-1-glycidylhydantoin-3-yl)propane.

Particularly preferred are those (poly)epoxy compound(s) mentioned in 1) and 2) and most preferred are those mentioned in 2).

Commercially available suitable epoxy compounds include phenyl glycidyl ether, butanediol diglycidyl ether (available from Huntsman as Araldite® DY-D) and bisphenol A diglycidyl ether (available from Huntsman as Araldite® GY240).

According to embodiments, the catalyst used for promoting epoxy reaction with $CO_2$ may be selected from ammonium salts represented by tetrabutylammonium bromide, tetrabutylammonium iodide or the like. Other preferred onium salts are a phosphonium salt represented by tetraphenyl phosphonium bromide, triphenylmethyl phosphonium bromide, and a sulfonium salt represented by tributylsulfonium bromide. For example a complex compound of an iodofluorohydrocarbon with a non-conjugated amine, ammonium salt, or a quaternary ammonium salt can be used. Metal halides and alkali metal halides can also be used, alone or in combination with other catalysts. Examples of metal halides include zinc chloride, zinc bromide and zinc iodide. Examples of alkali metal halides include lithium chloride, lithium bromide, lithium iodide and sodium iodide. By using a catalyst promoting epoxy reaction with $CO_2$ the carbon dioxide will

chemically react faster with epoxy groups of the epoxy compound to form a solid or liquid cyclic carbonate.

According to preferred embodiments, the blowing agents in the reactive composition are selected from at least HFO blowing agents and/or HCFO blowing agents and/or hydrocarbons such as cyclo-pentane having a lambda gas value ≤ 12 mW/m.K at 10°C.

According to preferred embodiments, the blowing agents comprise at least HFO blowing agents and/or HCFO blowing agents and/or hydrocarbon such as cyclo-pentane having a a lambda gas value ≤ 12 mW/m.K at 10°C.

According to embodiments, the blowing agents in the reactive composition comprise at least 3,3,3-trifluoropropene, 1,2,3,3,3 -pentafluoropropene, cis- and/or trans-1,3,3,3-tetrafluoropropene and/or 2,3,3,3-tetrafluoropropene, and/or 1,1,1,4,4,4-hexafluorobut-2-ene, and/or 1-chloro-3,3,3-trifluoropropene, and/or 2-chloro-3,3,3-trifluoropropene and mixtures thereof.

Preferred examples of commercially available suitable HFO blowing gases are Honeywell HFO-1234ze (Honeywell's trade name for trans - 1,3,3,3-tetrafluoropropene) or Opteon® 1100 (Chemours' trade name for cis-1,1,1,4,4,4-hexafluorobut-2-ene, $CF_3CH=CHCF_3$).

A preferred example of a commercially available suitable HCFO blowing gas is Honeywell Solstice® LBA 1233zd (Honeywell's trade name for trans-1-chloro-3,3,3-trifluoropropene, $CHCl=CHCF_3$) or Forane® 1233zd (Arkema's trade name for trans-1-chloro-3,3,3-trifluoropropene, $CHCl=CHCF_3$).

According to embodiments, the reactive composition may comprise blowing agents having a lambda gas value ≤ 12 mW/m.K at 10°C selected from hydrofluorocarbons (HFCs) and/or hydrocarbons such as cyclo-pentane and mixtures thereof.

According to embodiments, the reactive composition may further comprise blowing agents such as hydrocarbons selected from iso-pentane, iso-butane, n-pentane and mixtures thereof having a lambda gas value > 12 mW/m.K at 10°C.

According to embodiments, the reactive composition may further comprise additional blowing agents selected from formic acid, methylformate, dimethyl ether, water, methylene chloride, acetone, t-butanol, argon, krypton, xenon and mixtures thereof.

According to embodiments, the reactive composition may further comprise (optionally) one or more surfactants, one or more flame retardants, one or more antioxidants, one or more auxiliary blowing agents, one or more auxiliary urethane catalysts, one or more auxiliary trimerisation catalysts, or combinations thereof.

According to a second aspect, a process for making a polyisocyanurate (PIR) comprising insulation foam having significantly improved thermal insulation properties maintained over the average economic lifetime of the foam is disclosed thereby making use of the reactive composition of the first aspect of the invention.

The process for making the polyisocyanurate (PIR) comprising insulation foam according to the invention may comprise combining and/or mixing at least following compounds to form a reactive composition at an isocyanate index of at least 120:

a) An isocyanate composition comprising one or more isocyanate compound,
b) An isocyanate-reactive composition comprising one or more isocyanate-reactive compound, and
c) At least one PIR promoting catalyst, and
d) At least one physical blowing agent with a lambda gas ≤ 12 mW/m.K at 10 °C, and
e) At least one $CO_2$ scavenging compound selected from at least one epoxy compound having an equivalent weight lower than 300g/mol, and
f) Optionally a catalyst promoting epoxy reaction with $CO_2$

Characterized in that the amount of isocyanate-reactive compounds b) in the reactive composition is at least 10 wt% calculated on the total weight of the reactive composition, or at least more than the amount of epoxy compounds and the molar amount of epoxy groups in the reactive composition is at least 7.8 times higher than the molar amount of $CO_2$ formed by the water present in the reactive composition after reaction with isocyanates.

According to the invention an optimized amount of $CO_2$ scavenger compound needs to be added to the formulations used to make the PIR comprising insulation foam of the invention, wherein said optimized amount of $CO_2$ scavenger compound captures the $CO_2$ formed during foaming and ageing and which minimizes the amount of residual unreacted $CO_2$ scavenger compound.

According to embodiments, the amount of isocyanate-reactive compounds b) in the reactive composition is at least 10 wt%, preferably at least 15 wt%, more preferably at least 20 wt% calculated on the total weight of the reactive composition.

According to embodiments, the molar amount of epoxy groups in the reactive composition is preferably at least 10 times, more preferably at least 15 times higher than the molar amount of $CO_2$ formed by the water present in the reactive composition after reaction with isocyanates.

According to embodiments, the total amount of epoxy compounds in the reactive composition should be at least a

few weight percent, preferably > 2 wt%, more preferably > 5wt% , most preferably > 10 wt% calculated on the total weight of the reactive composition independently of the amount of water present in the reactive composition in order to be able to scavenge the $CO_2$ formed from carbodiimide reaction and/or additional $CO_2$ formed by the reaction between residual NCOs and moisture.

According to embodiments, the maximum amount of all epoxy compounds in the reactive composition should be < 25 wt%, preferably < 20 wt% calculated on the total weight of the reactive composition to avoid issues such as excessive reaction with isocyanate, increased exotherm, dimensional stability issues, too much unreacted epoxy compounds,...

According to embodiments, process for making the polyisocyanurate (PIR) comprising insulation foam according to the invention may further comprise combining and mixing one or more surfactants, one or more additives such as nucleating agents, adhesion promoters, one or more flame retardants, water, one or more antioxidants, one or more auxiliary blowing agents, one or more auxiliary urethane catalysts, one or more auxiliary trimerisation catalysts, one or more blowing catalysts or combinations thereof;

According to embodiments, the process for making the polyisocyanurate (PIR) comprising insulation foam according to the invention is performed at an isocyanate index of at least 120, preferably at least 150, more preferably at an isocyanate index higher than 200, most preferably at an isocyanate index higher than 250.

According to embodiments, the PIR promoting catalyst compound is selected from at least a trimerisation catalyst compound. Any compound that catalyzes the isocyanate trimerisation reaction can be used as trimerisation catalyst compound, such as tertiary amines, triazines, and, most preferably, metal salt trimerisation catalysts. Two or more different metal salt trimerisation catalysts can be used in the process of the present invention.

According to embodiments, the trimerization catalyst compound is a metal salt trimerisation catalyst selected from one or more organic salts, preferably said organic salt is selected from alkali metal, earth alkali metal and/or quaternary ammonium organic salts, more preferably from carboxylates and/or alkoxides such as potassium acetate, potassium hexanoate, potassium ethylhexanoate, potassium octanoate, potassium octoate, potassium lactate, sodium ethoxide, sodium formate, potassium formate, sodium acetate, potassium benzoate and mixtures thereof. Preferred metal salt trimerisation catalysts are potassium acetate such as commercially available Polycat® 46 catalyst from Air Products, Catalyst LB from Huntsman and Dabco® K15 catalyst from Air Products.

According to embodiments, the trimerization catalyst compound is a metal salt trimerisation catalyst selected from a Lithium halide salt, preferably LiCl compounds. Said Lithium halide (LiCl) compounds forming an active trimerization catalyst once combined with the epoxy compound(s).

According to embodiments, the trimerization catalyst compound is a metal salt trimerization catalyst selected from potassium ethoxide, sodium ethoxide, potassium methoxide, sodium methoxide, potassium tert-butoxide, titanium isopropoxide and mixtures thereof dissolved in a suitable carrier such as a monool/polyol composition.

According to preferred embodiments, the process for making the polyisocyanurate (PIR) comprising insulation foam according to the invention further includes the step of sealing the foam with a gas diffusion tight sealing wherein at least 50%, at least 75%, preferably at least 90%, more preferably 95 %, most preferably 90-100 % of the foam surfaces are covered with the gas diffusion tight sealing.

According to embodiments, the gas diffusion tight sealing is selected from metal foils such as Aluminum foil or metal multilayers comprising Aluminum foil and wherein at least 50%, preferably 50-95%, more preferably 50-85 %, most preferably 50-75 % of the foam surfaces are covered with this gas diffusion tight sealing.

According to preferred embodiments, the gas diffusion tight sealing is a moisture permeable layer, preferably comprising at least an ethylene vinyl alcohol (EVOH) copolymer resin layer as gas barrier polymer.

According to embodiments, the gas diffusion tight sealing may comprise at least one layer of a gas barrier polymer selected from ethylene vinyl alcohol copolymer (EVOH), polyvinyl alcohol (PVOH) and its copolymers, polyvinylidene chloride (PVDC), polyamide (PA), polyethylene terephthalate (PET), Polyketones (PK), Polyacrylonitriles (PAN) and combinations thereof. The gas barrier polymer layer may further comprise one or more additional layers which can, for example, comprise or consist of a thermoplastic polymer such as polyethylene and/or polypropylene. Further suitable sealings for use in the present invention are disclosed in EP 3 000 592.

According to preferred embodiments, the process for making the polyisocyanurate (PIR) comprising insulation foam according to the invention further includes the step of ageing the foam after the step of sealing the foam with a gas diffusion tight sealing. Said ageing step includes keeping the foam at a given temperature above room temperature until a stable low lambda value is obtained indicative of significant reaction between the epoxy compound and $CO_2$ has taken place. The foam is preferably aged between 25 and 100°C, more preferably between 40 and 80°C, even more preferably between 55 and 70°C, preferably for less than one month, more preferably for less than one week, even more preferably for less than one day.

According to embodiments, the polyisocyanate compounds used in the process for making the polyisocyanurate (PIR) comprising insulation foam according to the invention are selected from organic isocyanates containing a plurality of isocyanate groups including aliphatic isocyanates such as hexamethylene diisocyanate and more preferably aromatic isocyanates such as m- and p-phenylene diisocyanate, tolylene-2,4- and 2,6-diisocyanates, diphenylmethane-4,4'-diisocyanate, chlorophenylene-2,4-diisocyanate, naphthylene-1,5-diisocyanate, diphenylene-4,4'-diisocyanate, 4,4'-diisocyanate-3,3'-dimethyldiphenyl, 3-methyldiphenylmethane-4,4'-diisocyanate and diphenyl ether diisocyanate, cycloaliphatic diisocyanates such as cyclohexane-2,4- and 2,3-diisocyanates, 1-methyl cyclohexyl-2,4-and 2,6-diisocyanates and mixtures thereof and bis-(isocyanatocyclohexyl-)methane and triisocyanates such as 2,4,6-triisocyanatotoluene and 2,4,4'-triisocyanatodiphenyl ether.

According to embodiments, the polyisocyanate composition comprises mixtures of polyisocyanates. For example a mixture of tolylene diisocyanate isomers such as the commercially available mixtures of 2,4- and 2,6- isomers and also the mixture of di- and higher poly-isocyanates produced by phosgenation of aniline/formaldehyde condensates. Such mixtures are well-known in the art and include the crude phosgenation products containing mixtures of methylene bridged polyphenyl polyisocyanates, including diisocyanate, triisocyanate and higher polyisocyanates together with any phosgenation byproducts.

Preferred polyisocyanate compositions of the present invention are those wherein the polyisocyanate is an aromatic diisocyanate or polyisocyanate of higher functionality in particular crude mixtures of methylene bridged polyphenyl polyisocyanates containing diisocyanates, triisocyanate and higher functionality polyisocyanates. Methylene bridged polyphenyl polyisocyanates (e.g. Methylene diphenyl diisocyanate, abbreviated as MDI) are well known in the art and have the generic formula I wherein n is one or more and in the case of the crude mixtures represents an average of more than one. They are prepared by phosgenation of corresponding mixtures of polyamines obtained by condensation of aniline and formaldehyde.

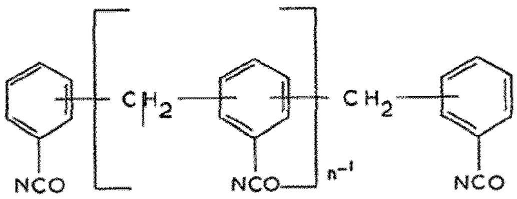

*(I)*

Other suitable polyisocyanate compositions may include isocyanate ended prepolymers made by reaction of an excess of a diisocyanate or higher functionality polyisocyanate with a hydroxyl ended polyester or hydroxyl ended polyether and products obtained by reacting an excess of diisocyanate or higher functionality polyisocyanate with a monomeric polyol or mixture of monomeric polyols such as ethylene glycol, trimethylol propane or butanediol. One preferred class of isocyanate-ended prepolymers are the isocyanate ended prepolymers of the crude mixtures of methylene bridged polyphenyl polyisocyanates containing diisocyanates, triisocyanates and higher functionality polyisocyanates.

According to embodiments, the polyisocyanate compounds in the polyisocyanate composition are selected from a toluene diisocyanate, a methylene diphenyl diisocyanate or a polyisocyanate composition comprising a methylene diphenyl diisocyanate or a mixture of such polyisocyanates.

According to embodiments, the one or more isocyanate reactive compounds used in the process for making the polyisocyanurate (PIR) comprising insulation foam according to the invention include any of those known in the art for the preparation of said foams. Of particular importance for the preparation of rigid foams are polyols and polyol mixtures having average hydroxyl numbers of from 50 to 1000, especially from 150 to 700 mg KOH/g, and hydroxyl functionalities of from 2 to 8, especially from 3 to 8. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example glycerol, trimethylolpropane, triethanolamine, pentaerythritol, sorbitol and sucrose; polyamines, for example ethylene diamine, tolylene diamine (TDA), diaminodiphenylmethane (DADPM) and polymethylene polyphenylene polyamines; and aminoalcohols, for example ethanolamine and diethanolamine; and mixtures of such initiators. Other suitable polymeric polyols include polyesters obtained by the condensation of appropriate proportions of glycols and higher functionality polyols with dicarboxylic or polycarboxylic acids. Still further suitable polymeric polyols include hydroxyl terminated polythioethers, polyamides, polyesteramides, polycarbonates, polyacetals, polyolefins and polysiloxanes.

The quantities of the polyisocyanate compositions and the one or more isocyanate reactive compounds to be reacted will depend upon the nature of the polyisocyanurate (PIR) comprising insulation foam to be produced and can be readily determined by those skilled in the art.

According to preferred embodiments, the physical blowing agent with a lambda gas ≤ 12 mW/m.K at 10 °C is selected from at least HFO blowing agents and/or HCFO blowing agents and/or hydrocarbons such as cyclo-pentane having a a lambda gas value ≤ 12 mW/m.K at 10°C.

According to preferred embodiments, the physical blowing agent with a lambda gas ≤ 12 mW/m.K at 10 °C comprises at least HFO blowing agents and/or HCFO blowing agents and/or hydrocarbon such as cyclo-pentane having a

a lambda gas value ≤ 12 mW/m.K at 10°C.

According to embodiments, the physical blowing agent with a lambda gas ≤ 12 mW/m.K at 10 °C comprise at least 3,3,3-trifluoropropene, 1,2,3,3,3 -pentafluoropropene, cis- and/or trans-1,3,3,3-tetrafluoropropene and/or 2,3,3,3-tetrafluoropropene, and/or 1,1,1,4,4,4-hexafluorobut-2-ene, and/or 1-chloro-3,3,3-trifluoropropene, and/or 2-chloro-3,3,3-trifluoropropene and mixtures thereof.

Preferred examples of commercially available suitable HFO blowing gases are Honeywell HFO-1234ze (Honeywell's trade name for trans - 1,3,3,3-tetrafluoropropene) or Opteon® 1100 (Chemours' trade name for cis-1,1,1,4,4,4-hexafluorobut-2-ene, $CF_3CH=CHCF_3$).

A preferred example of a commercially available suitable HCFO blowing gas is Honeywell Solstice® LBA 1233zd (Honeywell's trade name for trans-1-chloro-3,3,3-trifluoropropene, $CHCl=CHCF_3$) or Forane® 1233zd (Arkema's trade name for trans-1-chloro-3,3,3-trifluoropropene, $CHCl=CHCF_3$).

According to embodiments, the reactive composition may further comprise blowing agents having a lambda gas value ≤ 12 mW/m.K at 10°C selected from hydrofluorocarbons (HFCs) and/or hydrocarbons such as cyclo-pentane and mixtures thereof.

According to embodiments, the reactive composition may further comprise additional blowing agents such as hydrocarbons selected from iso-pentane, iso-butane, n-pentane and mixtures thereof having a lambda gas value > 12 mW/m.K at 10°C.

According to embodiments, the reactive composition may further comprise additional blowing agents selected from formic acid, methylformate, dimethyl ether, water, methylene chloride, acetone, t-butanol, argon, krypton, xenon and mixtures thereof.

The amount of blowing agent used can vary based on, for example, the intended use and application of the foam product and the desired foam properties and density. The blowing agent may be present in amounts from 1 to 60 parts by weight (pbw) per hundred parts by weight isocyanate reactive compounds (polyol), more preferably from 2 to 45 pbw. If (optionally) water is used as one of the blowing agents in the foam formulation, the amount of water is preferably limited to amounts up to 15 pbw, preferably < 5 pbw, more preferably < 3 pbw.

According to embodiments, the at least one blowing agent having a lambda gas value ≤12 mW/m.K at 10°C, may comprise additional blowing agents having a lambda gas value > 12 mW/m.K at 10°C and the ratio of blowing agent having a lambda gas value ≤ 12 mW/m.K at 10°C to the additional blowing agents is in the weight ratio 95/5 up to 5/95 calculated on the total weight of all blowing agents.

According to embodiments, the physical blowing agent with a lambda gas ≤ 12 mW/m.K at 10 °C is selected from HCFO and/or HFO blowing agents and comprises cyclopentane or mixtures of cyclopentane and isopentane as additional blowing agent and the ratio of HCFO and/or HFO blowing agents to cyclopentane blowing agent is in the weight ratio 95/5 up to 5/95 calculated on the total weight of all blowing agents.

There are many different orders of contacting or combining the compounds of the reactive composition required to make the PIR comprising foam of the present invention. One of skilled in the art would realize that varying the order of addition of the compounds falls within the scope of the present invention.

According to embodiments, the combining and mixing of the $CO_2$ scavenging compound(s) may be performed by adding said $CO_2$ scavenging compound(s) to the isocyanate-reactive composition before combining and/or mixing with the polyisocyanate composition (in other words the $CO_2$ scavenging compound(s) is added to the polyisocyanate-reactive composition before it is allowed to react with the polyisocyanate composition).

According to embodiments, the combining and mixing of the $CO_2$ scavenging compound(s) may be performed by adding said $CO_2$ scavenging compound(s) to the polyisocyanate composition before combining and/or mixing with the isocyanate-reactive composition (in other words the $CO_2$ scavenging compound(s) is added to the polyisocyanate composition before it is allowed to react with the polyisocyanate-reactive composition).

According to embodiments, the combining and mixing of the $CO_2$ scavenging compound(s) may be performed by adding said $CO_2$ scavenging compound(s) after lay-down of the reactive composition, said reactive composition being created by combining and/or mixing the polyisocyanate composition, the isocyanate-reactive composition, the catalyst compound(s), blowing agent(s) and optionally other ingredients.

According to embodiments, the combining and mixing of the $CO_2$ scavenging compound(s) may be performed by adding said $CO_2$ scavenging compound(s) to the reactive composition already being present in a mould, said reactive composition being created by combining and/or mixing the polyisocyanate composition, the isocyanate-reactive composition, the catalyst compound(s), blowing agent(s) and optionally other ingredients.

According to embodiments, the combining and mixing of the $CO_2$ scavenging compound(s) may be performed by adding said $CO_2$ scavenging compound(s) to the mould before injecting the reactive composition in the mould, said reactive composition being created by combining and/or mixing the polyisocyanate composition, the isocyanate-reactive composition, the catalyst compound(s), blowing agent(s) and optionally other ingredients.

According to <u>a third aspect</u>, a polyisocyanurate (PIR) comprising insulation foam having significantly improved thermal insulation properties maintained over the average economic lifetime of the foam is disclosed and made by the

process according to the second aspect of the invention and making use of the reactive composition of the first aspect of the invention.

According to embodiments, the PIR comprising foam according to the invention has preferably an amount of residual scavenging compound in the stabilized aged foam between 0 and 10 wt%, more preferably between 0 and 5 wt%, even more preferably between 0 and 3 wt% calculated on the total weight of the stabilized aged foam. According to embodiments, the PIR comprising insulation foam of the invention has a stabilized aged lambda value which is at least 1 mW/m.K at 10°C lower compared to state of the art polyisocyanurate (PIR) insulation foams using equal amounts and type of blowing agents but without using $CO_2$ scavengers after the same period of time.

According to embodiments, the wt % of $CO_2$ in the stabilized aged foam is between 0 and 2 wt%, preferably between 0 and 1 wt %, more preferably between 0 and 0.5 wt %, calculated on the total weight of the stabilized aged foam.

According to embodiments, the amount of residual epoxy compound in the stabilized aged foam is between 0 and 10 wt%, more preferably between 0 and 5 wt%, even more preferably between 0 and 3 wt% calculated on the total weight of the stabilized aged foam.

According to embodiments, the polyisocyanurate (PIR) comprising insulation foam according to the invention is kept under air diffusion tight conditions with a gas diffusion tight sealing and at least 50%, at least 75%, preferably at least 90%, more preferably 95 %, most preferably 90-100 % of the foam surfaces are covered with the gas diffusion tight sealing.

According to preferred embodiments, the gas diffusion tight sealing is a moisture permeable layer, preferably comprising at least an ethylene vinyl alcohol (EVOH) copolymer resin layer as gas barrier polymer.

According to embodiments, the gas diffusion tight sealing may comprise at least one layer of a gas barrier polymer selected from ethylene vinyl alcohol copolymer (EVOH), polyvinyl alcohol (PVOH) and its copolymers, polyvinylidene chloride (PVDC), polyamide (PA), polyethylene terephthalate (PET), Polyketones (PK), Polyacrylonitriles (PAN) and combinations thereof. The gas barrier polymer layer may further comprise one or more additional layers which can, for example, comprise or consist of a thermoplastic polymer such as polyethylene and/or polypropylene. Further suitable sealings for use in the present invention are disclosed in EP 3 000 592.

According to embodiments, the polyisocyanurate (PIR) comprising insulation foam according to the invention is kept under air diffusion tight conditions and the gas diffusion tight sealing is selected from metal foils such as Aluminum foil or metal multilayers comprising Aluminum foil and wherein at least 50%, preferably 50-95%, more preferably 50-85 %, most preferably 50-75 % of the foam surfaces are covered with the gas diffusion tight sealing.

The PIR comprising insulation foams according to the invention will give rise (after a stabilizing period wherein the scavenger is capturing the $CO_2$) to insulation foams having significantly low thermal conductivity. Said polyisocyanurate (PIR) comprising insulation foams may have a stabilized aged thermal conductivity over time which is lower than the initial thermal conductivity immediately after production of the foam due to the consumption of $CO_2$ by the $CO_2$ scavenger, the use of blowing agents having a a lambda gas value $\leq$ 12 mW/m.K at 10°C such as HFO/HCFO comprising blowing agents and the diffusion tight conditions.

According to embodiments, the polyisocyanurate (PIR) comprising insulation foam according to the invention is a rigid insulation foam.

According to embodiments, the polyisocyanurate (PIR) comprising insulation foam according to the invention has a foam density < 45 kg/m$^3$ and a stabilized thermal conductivity < 20 mW/m.K at 10 °C, preferably 14 up to 20 mW/m.K at 10 °C.

According to embodiments, the polyisocyanurate (PIR) comprising insulation foam according to the invention has a foam density > 45 kg/m$^3$ and a stabilized thermal conductivity < 25 mW/m.K at 10 °C, preferably 14 up to 25 mW/m.K at 10 °C.

According to embodiments, the polyisocyanurate (PIR) comprising insulation foam according to the invention has a closed cell content higher than 70% calculated on the total amount of closed and open cells being present in the material.

According to embodiments, the PIR comprising foam of the instant invention may be used as thermal insulator such as construction thermal insulation foam, appliance thermal insulation foam or pipe insulation. The polyisocyanurate (PIR) comprising insulation foam of the instant invention fulfills all the requirements for use as insulation material especially due to its low thermal conductivity value.

FIGURES

Figure 1 illustrates the influence of the $CO_2$ scavenger on the lambda value (measured at 10 °C) in function of time (ageing at room temperature) for foams made according to the invention (examples 1 & 2) and for comparative foams (comparative examples 1 & 2).

EXAMPLES

Chemicals used:

- Polyol: aromatic polyester polyol with OHv = 240 mg KOH/g (Stepanpol® PS 2352 from Stepan)
- Flame retardant Tris (chloroisopropyl) phosphate (TCPP)
- Catalyst 1: Pentamethyldiethylenetriamine (PMDETA)
- Catalyst 2 : Potassium octoate based catalyst (Dabco® K15)
- Catalyst 3 : Potassium acetate based catalyst (LB catalyst)
- Catalyst 4 : Tetrabutylammonium bromide (TBAB, Sigma-Aldrich)
- Foam stabilizer: Silicon surfactant (Tegostab® 8494 from Evonik)
- Blowing agent: Cyclopentane (CP, Alfa-Aesar)
- Water
- Epoxy compound: Phenyl Glycidyl Ether (PGE, Sigma-Aldrich)
- Polyisocyanate Suprasec® 2085 (S2085 from Huntsman), a high functionality polymeric MDI composition having NCO% = 30.5 and an average functionality = 2.9

Fabrication of PIR comprising insulation foams using $CO_2$ scavenger and Cyclopentane blowing agent (examples 1 & 2) and comparative examples 1&2 using no or limited amount of $CO_2$ scavenger (illustrating the effect of the $CO_2$ scavenger)

The following PIR formulations (Table 1) were foamed in a closed metallic mold ($20\times20\times4 cm^3$) pre-heated to 50°C of which internal surfaces were preliminarily covered with a gas diffusion tight sealing (a multilayer Aluminum comprising foil being impermeable to Air). Demolding was performed after 1h and the sealing was removed from the lateral foam sides leaving them open. The resulting foams therefore had their top and bottom surfaces covered with a gas diffusion tight sealing (71.4% of the surfaces of the foams).

For the foams containing the epoxy compound (PGE), the $CO_2$/epoxy reaction catalyst (TBAB) was first dissolved inside the epoxy compound before mixing the resulting solution with the rest of the polyol blend prior reaction with the isocyanate, and the weight ratio TBAB/PGE was kept constant at 0.33.

The amount of reaction mixture inserted inside the mold was adjusted to ensure good mold filling as well as minimal overpacking. The foams were aged at room temperature and their lambda value at 10°C was measured in a LaserComp Fox200 at regular time intervals until reaching a constant value (stabilized lambda value, ~100 days). $CO_2$ levels inside the foams were then determined by cell gas analysis (internally developed method). FTIR (Fourier Transform InfraRed) spectra were also recorded to qualitatively evidence or not the presence of carbonate adducts in the foams (wavenumber ~1798$cm^{-1}$).

**Table 1.** Rigid PIR foam formulations

| Chemicals | Comp. Ex. 1 (pbw) | Comp. Ex. 2 (pbw) | Example 1 (pbw) | Example 2 (pbw) |
|---|---|---|---|---|
| **PS2352** | 80.16 | 80.16 | 80.16 | 80.16 |
| **TCPP** | 16 | 16 | 16 | 16 |
| **PMDETA** | 0.1 | 0.1 | 0.1 | 0.1 |
| **K15** | 1.36 | 1.36 | 1.36 | 1.36 |
| **LB** | 0.45 | 0.45 | 0.45 | 0.45 |

(continued)

| Chemicals | Comp. Ex. 1 (pbw) | Comp. Ex. 2 (pbw) | Example 1 (pbw) | Example 2 (pbw) |
|---|---|---|---|---|
| TBAB | 0 | 1.39 | 7.16 | 16.21 |
| TB8494 | 1.6 | 1.6 | 1.6 | 1.6 |
| CP | 17.2 | 17.2 | 17.2 | 17.2 |
| Water | 0.33 | 0.33 | 0.33 | 0.33 |
| PGE | 0 | 4.17 | 21.48 | 48.63 |
| Total polyol blend | 117.2 | 122.76 | 145.84 | 182.04 |
| | | | | |
| Suprasec® 2085 | 170 | 170 | 170 | 170 |
| | | | | |
| Iso Index | 314 | 314 | 314 | 314 |
| | | | | |
| Foam density (kg/m$^3$) | 53 | 53 | 59 | 76 |
| Molar ratio PGE/water | 0 | 1.5 | 7.8 | 17.7 |

The lambda values for the 4 foams are plotted in Figure 1 and additional foam properties are summarized in Table 2. Comparative Example 1 which is free of $CO_2$ scavenger epoxy compound has the highest aged lambda value and the largest amount of $CO_2$. Comparative Example 2 which comprises a small amount of epoxy compound in its formulation displays only a negligible decrease in its aged lambda value compared to the epoxy compound-free Comparative Example 1, together with a significant level of residual $CO_2$. Examples 1 and 2 according to the invention have higher amounts of epoxy compounds and ultimately display lower aged lambda values and significantly lower levels of $CO_2$ compared to Comparative Examples 1 and 2, indicative of successful $CO_2$ scavenging. Carbonate group formation was confirmed as well by the well noticeable presence of FTIR absorption peaks at 1798cm$^{-1}$.

These results evidence that the proper amount of epoxy compound is crucial to significantly scavenge $CO_2$ and to ultimately achieve improved thermal insulation performance (i.e. lower lambda values), and as a consequence epoxy group/water molar ratios larger than 7.8 have to be used (or in other words the molar amount of epoxy compounds in the reactive composition needs to be at least 7.8 times higher than the molar amount of $CO_2$ formed by the water).

**Table 2.** PIR foam properties

| | Molar ratio epoxy group/water in starting formulation | PGE amount in starting formulation (wt%) | $CO_2$ amount in aged foams (wt%) | Lambda (10°C) fresh foams (mW/m.K) | Lambda (10°C) aged foams (mW/m.K) | Delta lambda (10°C, aged-fresh) | FTIR carbonate signal intensity at 1798 cm$^{-1}$ (aged foams) |
|---|---|---|---|---|---|---|---|
| Comp. Ex. 1 | 0 | 0 | 2.38 | 23.7 | 24.3 | +0.6 | No Peak |
| Comp. Ex. 2 | 1.5 | 1.4 | 1.67 | 22.8 | 24.0 | +1.2 | Very Small |
| Ex. 1 | 7.8 | 6.8 | 0.53 | 21.8 | 22.1 | +0.3 | Small |
| Ex. 2 | 17.7 | 13.8 | 0.05 | 22.8 | 21.1 | -1.7 | Medium |

## Claims

1. A reactive composition for making a PIR comprising foam at an isocyanate index of at least 120, said composition comprising at least:

a) An isocyanate composition comprising one or more isocyanate compounds, and
b) An isocyanate-reactive composition comprising one or more isocyanate-reactive compounds, and
c) At least one PIR promoting catalyst, and
d) At least one physical blowing agent with a lambda gas ≤ 12 mW/m.K at 10 °C, and
e) At least one $CO_2$ scavenging compound selected from at least one epoxy compound having an equivalent weight lower than 300g/mol, and
f) Optionally a catalyst promoting epoxy reaction with $CO_2$

**Characterized in that** the amount of isocyanate-reactive compounds b) in the reactive composition is at least 10 wt% calculated on the total weight of the reactive composition or at least more than the amount of epoxy compounds, and the molar amount of epoxy compounds in the reactive composition is at least 7.8 times higher than the molar amount of $CO_2$ formed by the water present in the reactive composition after reaction with isocyanates.

**2.** The reactive composition according to claim 1 wherein the amount of isocyanate-reactive compounds b) in the reactive composition is at least 15 wt%, preferably at least 20 wt% calculated on the total weight of the reactive composition.

**3.** The reactive composition according to any of foregoing claims wherein the molar amount of epoxy compounds in the reactive composition is preferably at least 10 times, more preferably at least 15 times higher than the molar amount of $CO_2$ formed by the water present in the reactive composition after reaction with isocyanates.

**4.** The reactive composition according to any of foregoing claims wherein the maximum amount of all epoxy compounds in the reactive composition is < 25 wt%, preferably < 20 wt% calculated on the total weight of the reactive composition.

**5.** The reactive composition according to any of foregoing claims wherein the at least one epoxy compound is selected from epoxy compounds having equivalent weight lower than 250g/mol, preferably lower than 200g/mol and wherein the at least one epoxy compound used is liquid at 20 °C.

**6.** The reactive composition according to any of foregoing claims wherein the catalyst used for promoting epoxy reaction with $CO_2$ is selected from ammonium salts, more preferably selected from tetrabutylammonium bromide and/or tetrabutylammonium iodide.

**7.** The reactive composition according to any of foregoing claims wherein the at least one physical blowing agent having a lambda gas value ≤ 12 mW/m.K @ 10°C is selected from an HFO blowing agent and/or HCFO blowing agent and/or hydrocarbon blowing agent such as cyclopentane and mixtures thereof.

**8.** The reactive composition according to any of foregoing claims wherein the at least one physical blowing agent having a lambda gas value ≤ 12 mW/m.K @ 10°C is selected from chlorofluorocarbons (CFCs) and/or hydrofluorocarbons (HFCs) and/or hydrochlorofluorocarbons (HCFCs).

**9.** The reactive composition according to any of foregoing claims wherein the polyisocyanate compounds are selected from a toluene diisocyanate, a methylene diphenyl diisocyanate or a polyisocyanate composition comprising a methylene diphenyl diisocyanate or a mixture of such polyisocyanates.

**10.** The reactive composition according to any of foregoing claims wherein the one or more isocyanate reactive compounds comprise polyols and polyol mixtures having average hydroxyl numbers of from 50 to 1000, especially from 150 to 700 mg KOH/g, and hydroxyl functionalities of from 2 to 8, especially from 3 to 8.

**11.** The reactive composition according to any of foregoing claims wherein the blowing agent is present in an amount of 1 to 60 parts by weight, preferably from 2 to 45 parts by weight per hundred parts by weight isocyanate reactive compounds.

**12.** The reactive composition according to any of foregoing claims further comprising beside the blowing agents having a lambda gas value ≤ 12 mW/m.K at 10°C additional blowing agents having a lambda gas value >12 mW/m.K at 10°C and wherein the ratio of blowing agents having a lambda gas value ≤12 mW/m.K at 10°C to the additional blowing agents is in the weight ratio 95/5 up to 5/95 calculated on the total weight of all blowing agents.

**13.** A process for making a PIR comprising insulation foam, said process comprising combining and/or mixing the

ingredients of the reactive composition according to any of foregoing claims 1-12 at an isocyanate index of at least 120, preferably at least 150, more preferably at least 200, most preferably at least 250.

**14.** The process according to claim 13 further including a step of sealing the foam with a gas diffusion tight sealing wherein at least 50%, preferably at least 90%, more preferably 95 %, most preferably 90-100 % of the foam surfaces are covered with the gas diffusion tight sealing.

**15.** The process according to claims 13 or 14 wherein the gas diffusion tight sealing is selected from metal foils such as Aluminum foil or metal multilayers comprising Aluminum foil and/or gas barrier polymer layers such as ethylene vinyl alcohol copolymer (EVOH), polyvinyl alcohol (PVOH) and its copolymers, polyvinylidene chloride (PVDC), polyamide (PA), polyethylene terephthalate (PET), Polyketones (PK), Polyacrilonitriles (PAN) and combinations thereof and/or a thermoplastic polymer such as polyethylene and/or polypropylene.

**16.** The process according to claims 13-15 further including after sealing the foam a step of ageing the foam, said ageing step includes keeping the foam at a temperature between 25 and 100°C, preferably between 40 and 80°C, more preferably between 55 and 70°C for less than one month, more preferably for less than one week, even more preferably for less than one day.

**17.** A stabilized PIR comprising insulation foam made using the process according to any of claims 13-16 wherein the wt % of $CO_2$ in the stabilized aged foam is between 0 and 2 wt%, preferably between 0 and 1 wt %, more preferably between 0 and 0.5 wt %, calculated on the total weight of the stabilized aged foam.

**18.** The stabilized PIR comprising insulation foam according to claim 17 having a foam density < 45 kg/$m^3$ and a stabilized thermal conductivity < 20 mW/m.K at 10 °C, preferably 14 up to 20 mW/m.K at 10 °C.

**19.** The stabilized PIR comprising insulation foam according to claim 17 having a foam density > 45 kg/$m^3$ and a stabilized thermal conductivity < 25 mW/m.K at 10 °C, preferably 14 up to 25 mW/m.K at 10 °C.

**20.** Use of the polyisocyanurate (PIR) comprising insulation foam according to any of claims 17-19 as thermal insulator such as construction thermal insulation foam, appliance thermal insulation foam or pipe insulation.

**Patentansprüche**

**1.** Reaktive Zusammensetzung zur Herstellung eines PIR-umfassenden Schaums mit einem Isocyanatindex von mindestens 120, wobei die Zusammensetzung mindestens Folgendes umfasst:

a) eine Isocyanatzusammensetzung, die eine oder mehrere Isocyanatverbindungen umfasst, und
b) eine isocyanatreaktive Zusammensetzung, die eine oder mehrere isocyanatreaktive Verbindungen umfasst, und
c) mindestens einen PIR-fördernden Katalysator und
d) mindestens ein physikalisches Treibmittel mit einem Lambda-Gas ≤ 12 mW/mK bei 10 °C, und
e) mindestens eine $CO_2$-abfangende Verbindung, ausgewählt aus mindestens einer Epoxidverbindung mit einem Äquivalentgewicht von weniger als 300 g/Mol, und
f) optional einen Katalysator, der die Epoxidreaktion mit $CO_2$ fördert,
**dadurch gekennzeichnet, dass** die Menge an isocyanatreaktiven Verbindungen b) in der reaktiven Zusammensetzung mindestens 10 Gew.-%, berechnet auf das Gesamtgewicht der reaktiven Zusammensetzung, oder mindestens mehr als die Menge an Epoxidverbindungen beträgt, und die molare Menge an Epoxidverbindungen in der reaktiven Zusammensetzung mindestens 7,8-mal höher ist als die molare Menge an $CO_2$, die durch das in der reaktiven Zusammensetzung nach der Reaktion mit Isocyanaten vorhandene Wasser gebildet wird.

**2.** Reaktive Zusammensetzung nach Anspruch 1, wobei die Menge an isocyanatreaktiven Verbindungen b) in der reaktiven Zusammensetzung mindestens 15 Gew.-%, vorzugsweise mindestens 20 Gew.-%, berechnet auf das Gesamtgewicht der reaktiven Zusammensetzung, beträgt.

**3.** Reaktive Zusammensetzung nach einem der vorhergehenden Ansprüche, wobei die molare Menge an Epoxidverbindungen in der reaktiven Zusammensetzung vorzugsweise mindestens 10-mal, mehr bevorzugt mindestens 15-mal höher ist als die molare Menge an $CO_2$, die durch das in der reaktiven Zusammensetzung nach der Reaktion mit

Isocyanaten vorhandene Wasser gebildet wird.

4. Reaktive Zusammensetzung nach einem der vorhergehenden Ansprüche, wobei die Maximalmenge aller Epoxidverbindungen in der reaktiven Zusammensetzung < 25 Gew.-%, vorzugsweise < 20 Gew.-%, berechnet auf das Gesamtgewicht der reaktiven Zusammensetzung, beträgt.

5. Reaktive Zusammensetzung nach einem der vorhergehenden Ansprüche, wobei die mindestens eine Epoxidverbindung aus Epoxidverbindungen mit einem Äquivalentgewicht von weniger als 250 g/mol, vorzugsweise weniger als 200 g/mol ausgewählt ist und wobei die mindestens eine verwendete Epoxidverbindung bei 20 °C flüssig ist.

6. Reaktive Zusammensetzung nach einem der vorhergehenden Ansprüche, wobei der zur Förderung der Epoxidreaktion mit $CO_2$ verwendete Katalysator ausgewählt ist aus Ammoniumsalzen, mehr bevorzugt ausgewählt ist aus Tetrabutylammoniumbromid und/oder Tetrabutylammoniumiodid.

7. Reaktive Zusammensetzung nach einem der vorhergehenden Ansprüche, wobei das mindestens eine physikalische Treibmittel mit einem Lambda-Gaswert ≤ 12 mW/m.K bei 10 °C ausgewählt ist aus einem HFO-Treibmittel und/oder HCFO-Treibmittel und/oder Kohlenwasserstoff-Treibmittel wie Cyclopentan und Mischungen davon.

8. Reaktive Zusammensetzung nach einem der vorhergehenden Ansprüche, wobei das mindestens eine physikalische Treibmittel mit einem Lambda-Gaswert ≤ 12 mW/m.K bei 10 °C ausgewählt ist aus Fluorchlorkohlenwasserstoffen (FCKW) und/oder Fluorkohlenwasserstoffen (FKW) und/oder teilhalogenierten Fluorchlorkohlenwasserstoffen (H-FCKW) .

9. Reaktive Zusammensetzung nach einem der vorhergehenden Ansprüche, wobei die Polyisocyanatverbindungen ausgewählt sind aus einem Toluoldiisocyanat, einem Methylendiphenyldiisocyanat oder einer Polyisocyanatzusammensetzung, die ein Methylendiphenyldiisocyanat oder eine Mischung solcher Polyisocyanate umfasst.

10. Reaktive Zusammensetzung nach einem der vorhergehenden Ansprüche, wobei die eine oder mehreren isocyanatreaktiven Verbindungen Polyole und Polyolmischungen mit durchschnittlichen Hydroxylzahlen von 50 bis 1000, insbesondere von 150 bis 700 mg KOH/g, und Hydroxylfunktionalitäten von 2 bis 8, insbesondere von 3 bis 8, umfassen.

11. Reaktive Zusammensetzung nach einem der vorhergehenden Ansprüche, wobei das Treibmittel in einer Menge von 1 bis 60 Gewichtsteilen, vorzugsweise von 2 bis 45 Gewichtsteilen pro hundert Gewichtsteilen isocyanatreaktiver Verbindungen vorhanden ist.

12. Reaktive Zusammensetzung nach einem der vorhergehenden Ansprüche, die neben den Treibmitteln mit einem Lambda-Gaswert ≤ 12 mW/m.K bei 10 °C ferner zusätzliche Treibmittel mit einem Lambda-Gaswert > 12 mW/mK bei 10 °C umfasst und wobei das Verhältnis von Treibmitteln mit einem Lambda-Gaswert ≤ 12 mW/mK bei 10 °C zu den zusätzlichen Treibmitteln im Gewichtsverhältnis 95/5 bis 5/95, berechnet auf das Gesamtgewicht aller Treibmittel, liegt.

13. Verfahren zum Herstellen eines PIR-umfassenden Dämmschaums, wobei das Verfahren das Kombinieren und/oder Mischen der Bestandteile der reaktiven Zusammensetzung nach einem der vorhergehenden Ansprüche 1 bis 12 bei einem Isocyanatindex von mindestens 120, vorzugsweise mindestens 150, mehr bevorzugt mindestens 200, am meisten bevorzugt mindestens 250 umfasst.

14. Verfahren nach Anspruch 13, ferner einschließend einen Schritt des Versiegelns des Schaums mit einer gasdiffusionsdichten Versiegelung, wobei mindestens 50 %, vorzugsweise mindestens 90 %, mehr bevorzugt 95 %, am meisten bevorzugt 90-100 % der Schaumoberflächen mit der gasdiffusionsdichten Versiegelung bedeckt sind.

15. Verfahren nach den Ansprüchen 13 oder 14, wobei die gasdiffusionsdichte Versiegelung ausgewählt ist aus Metallfolien, wie Aluminiumfolie, oder Metallmehrschichten, die Aluminiumfolie umfassen, und/oder Gasbarrierepolymerschichten, wie EthylenVinylalkohol-Copolymer (EVOH), Polyvinylalkohol (PVOH) und seine Copolymere, Polyvinylidenchlorid (PVDC), Polyamid (PA), Polyethylenterephthalat (PET), Polyketonen (PK), Polyacrylnitrilen (PAN) und Kombinationen davon und/oder einem thermoplastischen Polymer, wie Polyethylen und/oder Polypropylen.

16. Verfahren nach den Ansprüchen 13 bis 15, ferner einschließend, nach dem Versiegeln des Schaums, einen Schritt zum Altern des Schaums, wobei der Alterungsschritt das Halten des Schaums bei einer Temperatur zwischen 25 und 100 °C, vorzugsweise zwischen 40 und 80 °C, mehr bevorzugt zwischen 55 und 70 °C für weniger als einen Monat, mehr bevorzugt für weniger als eine Woche, noch mehr bevorzugt für weniger als einen Tag umfasst.

17. Stabilisierter PIR-umfassender Dämmschaum, der unter Verwendung des Verfahrens nach einem der Ansprüche 13 bis 16 hergestellt wurde, wobei die Gew.-% an $CO_2$ in dem stabilisierten gealterten Schaum zwischen 0 und 2 Gew.-%, vorzugsweise zwischen 0 und 1 Gew.-%, mehr bevorzugt zwischen 0 und 0,5 Gew.-%, berechnet auf das Gesamtgewicht des stabilisierten gealterten Schaums, liegen.

18. Stabilisierter PIR-umfassender Dämmschaum nach Anspruch 17, aufweisend eine Schaumdichte < 45 kg/m$^3$ und eine stabilisierte Wärmeleitfähigkeit < 20 mW/m.K bei 10 °C, vorzugsweise 14 bis zu 20 mW/m.K bei 10 °C.

19. Stabilisierter PIR-umfassender Dämmschaum nach Anspruch 17, aufweisend eine Schaumdichte > 45 kg/m$^3$ und eine stabilisierte Wärmeleitfähigkeit < 25 mW/m.K bei 10 °C, vorzugsweise 14 bis 25 mW/m.K bei 10 °C.

20. Verwendung des Polyisocyanurat (PIR)-umfassenden Dämmschaums nach einem der Ansprüche 17 bis 19 als Wärmedämmstoff, beispielsweise als Wärmedämmschaum für die Konstruktion, als Wärmedämmschaum für Geräte oder als Rohrdämmung.

**Revendications**

1. Composition réactive permettant de fabriquer un PIR comprenant une mousse à un indice d'isocyanate d'au moins 120, ladite composition comprenant au moins :

   a) Une composition d'isocyanate comprenant un ou plusieurs composés isocyanate, et
   b) Une composition réactive à l'isocyanate comprenant un ou plusieurs composés réactifs à l'isocyanate, et
   c) Au moins un catalyseur favorisant le PIR, et
   d) Au moins un agent gonflant physique avec un gaz lambda ≤ 12 mW/m.K à 10 °C, et
   e) Au moins un composé piégeant le $CO_2$ choisi parmi au moins un composé époxy ayant un poids équivalent inférieur à 300 g/mol, et
   f) Facultativement, un catalyseur favorisant la réaction de l'époxy avec le $CO_2$
   **Caractérisée en ce que** la quantité de composés réactifs à l'isocyanate b) dans la composition réactive est d'au moins 10 % en poids, calculée par rapport au poids total de la composition réactive ou au moins supérieure à la quantité de composés époxy, et la quantité molaire de composés époxy dans la composition réactive est au moins 7,8 fois supérieure à la quantité molaire de $CO_2$ formée par l'eau présente dans la composition réactive après réaction avec des isocyanates.

2. Composition réactive selon la revendication 1, dans laquelle la quantité de composés réactifs à l'isocyanate b) dans la composition réactive est d'au moins 15 % en poids, de préférence d'au moins 20 % en poids, calculée par rapport au poids total de la composition réactive.

3. Composition réactive selon l'une quelconque des revendications précédentes, dans laquelle la quantité molaire de composés époxy dans la composition réactive est de préférence au moins 10 fois, plus préférablement au moins 15 fois supérieure à la quantité molaire de $CO_2$ formée par l'eau présente dans la composition réactive après réaction avec des isocyanates.

4. Composition réactive selon l'une quelconque des revendications précédentes, dans laquelle la quantité maximale de tous les composés époxy dans la composition réactive est
   < 25 % en poids, de préférence < 20 % en poids, calculée par rapport au poids total de la composition réactive.

5. Composition réactive selon l'une quelconque des revendications précédentes, dans laquelle l'au moins un composé époxy est choisi parmi des composés époxy ayant un poids équivalent inférieur à 250 g/mol, de préférence inférieur à 200 g/mol, et dans laquelle l'au moins un composé époxy utilisé est liquide à 20 °C.

6. Composition réactive selon l'une quelconque des revendications précédentes, dans laquelle le catalyseur utilisé pour promouvoir la réaction de l'époxy avec le $CO_2$ est choisi parmi des sels d'ammonium, plus préférablement choisi

parmi le bromure de tétrabutylammonium et/ou l'iodure de tétrabutylammonium.

**7.** Composition réactive selon l'une quelconque des revendications précédentes, dans laquelle l'au moins un agent gonflant physique ayant une valeur de gaz lambda ≤ 12 mW/m.K @ 10 °C est choisi parmi un agent gonflant HFO et/ou un agent gonflant HCFO et/ou un agent gonflant hydrocarboné tel que le cyclopentane et des mélanges de ceux-ci.

**8.** Composition réactive selon l'une quelconque des revendications précédentes, dans laquelle l'au moins un agent gonflant physique ayant une valeur de gaz lambda ≤ 12 mW/m.K @ 10 °C est choisi parmi les chlorofluorocarbones (CFC) et/ou les hydrofluorocarbones (HFC) et/ou les hydrochlorofluorocarbones (HCFC).

**9.** Composition réactive selon l'une quelconque des revendications précédentes, dans laquelle les composés polyisocyanate sont choisis parmi un diisocyanate de toluène, un diisocyanate de méthylène diphényle ou une composition de polyisocyanate comprenant un diisocyanate de méthylène diphényle ou un mélange de ces polyisocyanates.

**10.** Composition réactive selon l'une quelconque des revendications précédentes, dans laquelle le ou les composés réactifs à l'isocyanate comprennent des polyols et des mélanges de polyols ayant des indices d'hydroxyle moyens allant de 50 à 1000, en particulier de 150 à 700 mg KOH/g, et des fonctionnalités hydroxyle allant de 2 à 8, en particulier de 3 à 8.

**11.** Composition réactive selon l'une quelconque des revendications précédentes, dans laquelle l'agent gonflant est présent en une quantité de 1 à 60 parties en poids, de préférence de 2 à 45 parties en poids pour cent parties en poids de composés réactifs à l'isocyanate.

**12.** Composition réactive selon l'une quelconque des revendications précédentes, comprenant en outre, à côté des agents gonflants ayant une valeur de gaz lambda ≤ 12 mW/m.K à 10 °C, des agents gonflants supplémentaires ayant une valeur de gaz lambda > 12 mW/m.K à 10 °C, et dans laquelle le rapport des agents gonflants ayant une valeur de gaz lambda ≤ 12 mW/m.K à 10 °C aux agents gonflants supplémentaires est dans le rapport de poids 95/5 à 5/95, calculé par rapport au poids total de tous les agents gonflants.

**13.** Procédé permettant de fabriquer un PIR comprenant une mousse isolante, ledit procédé comprenant la combinaison et/ou le mélange des ingrédients de la composition réactive selon l'une quelconque des revendications précédentes 1 à 12 à un indice d'isocyanate d'au moins 120, de préférence d'au moins 150, plus préférablement d'au moins 200, le plus préférablement d'au moins 250.

**14.** Procédé selon la revendication 13, comportant en outre une étape de scellement de la mousse avec un scellement étanche à la diffusion de gaz, dans lequel au moins 50 %, de préférence au moins 90 %, plus préférablement 95 %, le plus préférablement 90 à 100 % des surfaces de mousse sont couvertes par le scellement étanche à la diffusion de gaz.

**15.** Procédé selon les revendications 13 ou 14, dans lequel le scellement étanche à la diffusion de gaz est choisi parmi des feuilles métalliques telles que des feuilles d'aluminium ou des multicouches métalliques comprenant une feuille d'aluminium et/ou des couches de polymère barrières aux gaz telles que copolymère éthylène-alcool vinylique (EVOH), alcool polyvinylique (PVOH) et ses copolymères, chlorure de polyvinylidène (PVDC), polyamide (PA), polyéthylène téréphtalate (PET), polycétones (PK), polyacrilonitriles (PAN) et combinaisons de ceux-ci et/ou un polymère thermoplastique tel que polyéthylène et/ou polypropylène.

**16.** Procédé selon les revendications 13 à 15, comportant en outre, après le scellement de la mousse, une étape de vieillissement de la mousse, ladite étape de vieillissement consistant à maintenir la mousse à une température comprise entre 25 et 100 °C, de préférence entre 40 et 80 °C, plus préférablement entre 55 et 70 °C pendant moins d'un mois, plus préférablement pendant moins d'une semaine, encore plus préférablement pendant moins d'un jour.

**17.** PIR stabilisé comprenant une mousse isolante fabriquée à l'aide du procédé selon l'une quelconque des revendications 13 à 16, dans lequel le % en poids de $CO_2$ dans la mousse vieillie stabilisée est compris entre 0 et 2 % en poids, de préférence entre 0 et 1 % en poids, plus préférablement entre 0 et 0,5 % en poids, calculé par rapport au poids total de la mousse vieillie stabilisée.

**18.** PIR stabilisé comprenant une mousse isolante selon la revendication 17 ayant une densité de mousse < 45 $kg/m^3$ et

une conductivité thermique stabilisée < 20 mW/m.K à 10 °C, de préférence de 14 à 20 mW/m.K à 10 °C.

**19.** PIR stabilisé comprenant une mousse isolante selon la revendication 17 ayant une densité de mousse > 45 kg/$m^3$ et une conductivité thermique stabilisée < 25 mW/m.K à 10 °C, de préférence de 14 à 25 mW/m.K à 10 °C.

**20.** Utilisation du polyisocyanurate (PIR) comprenant une mousse isolante selon l'une quelconque des revendications 17 à 19 comme isolant thermique tel qu'une mousse d'isolation thermique de construction, une mousse d'isolation thermique d'appareils ou une isolation de tuyaux.

FIGURE 1

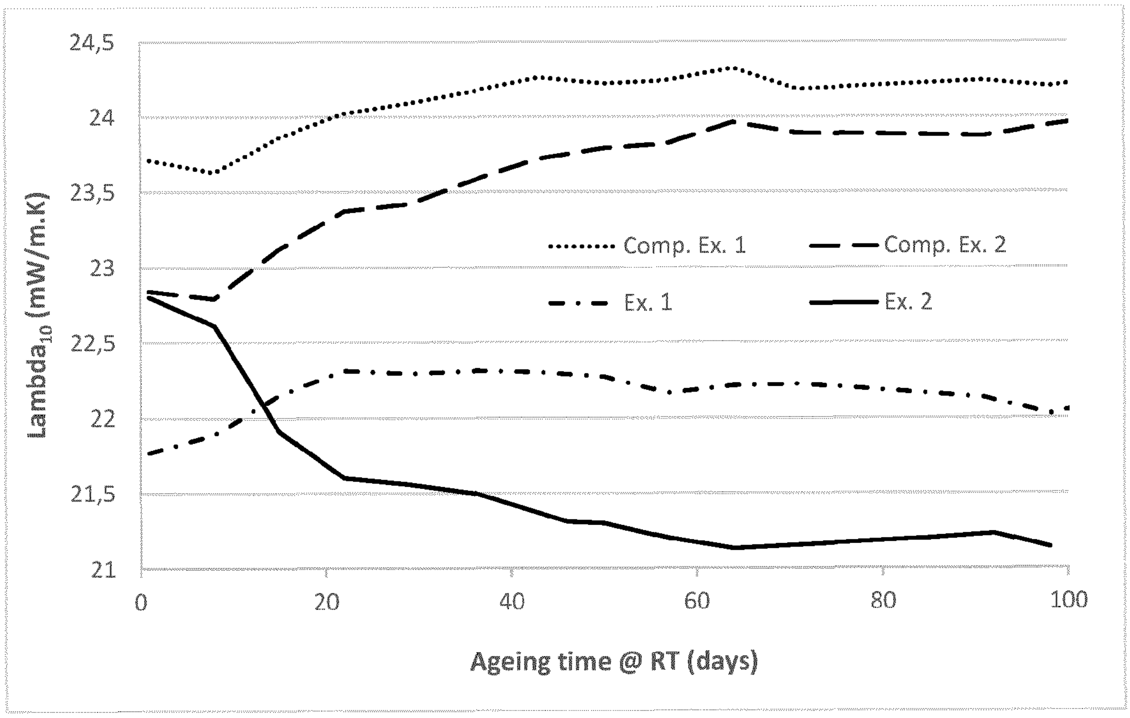
24,5
24
23,5
23
22,5
22
21,5
21
Lambda10 (mW/m.K)
0
20
40
60
80
100
Ageing time @ RT (days)
Comp. Ex. 1
Comp. Ex. 2
Ex. 1
Ex. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1031601 A
- EP 0618253 A
- WO 2019211259 A
- EP 0723989 A
- EP 3000592 A